# EUROPEAN PATENT SPECIFICATION

(11) **EP 3 081 472 B1**
(45) Date of publication and mention of the grant of the patent: **25.09.2019**
(21) Application number: 16161533.1
(22) Date of filing: 22.03.2016
(51) Int. Cl.: B62K 3/00

(54) **POWERED MOBILITY DEVICE WITH TILT MECHANISM HAVING MULTIPLE PIVOTS**
ANGETRIEBENE MOBILITÄTSVORRICHTUNG MIT KIPPMECHANISMUS MIT MEHREREN DREHPUNKTEN
DISPOSITIF DE MOBILITÉ ÉLECTRIQUE AVEC MÉCANISME D'INCLINAISON À PLUSIEURS PIVOTS

(30) Priority: 10.04.2015 NZ 70688115
(43) Date of publication of application: 19.10.2016
(73) Proprietor: OGO Technology Limited, 5512 Otaki (NZ)
(72) Inventor: Halsall, Kevin Thomas, 5512 Otaki (NZ)
(74) Representative: Vesterinen, Jussi Tapio

(56) References cited:
- EP-A1- 1 967 409
- EP-A1- 2 601 093
- US-A1- 2009 107 240
- US-A1- 2009 256 331
- US-A1- 2010 017 106
- US-A1- 2015 008 051

## Description

### Field of the Invention

The invention relates to a powered mobility device with tilt mechanism having multiple pivots, typically a powered wheelchair, which is able to be steered with or without the use of hands.

### Background of Invention

A problem with existing mobility devices such as wheelchairs is that they are not easily operable by a user, especially those users that have significant loss or impaired movement of their limbs (arms and legs).

Also most all wheelchairs are not suitable to be used on all surface types. They are not able to be used easily or effectively on soft surfaces such as lawns or undulating surfaces, i.e. they are not able to be used "off road". They are prone to get stuck and require assistance of others to be able to go "off road".

Powered wheelchairs typically require hand controls to steer and propel the wheel chair forward and backward and/or only one pivoting mechanism for controlling the forward and backward movement of the wheelchair. It is known to have wheel chairs that are controlled by the weight placement of the user, however these are not suitable for providing fine control of such movement in places where required (such as a crowded place or in a shop) or are not suitable for "off road" use.

The closest prior art document EP2601093 discloses a conversion assembly that can be applied to "SEGWAY®" transporters or to similar vehicles with equivalent working principle to enable riding thereof in a position where the user is sitting down instead of standing up. The conversion assembly comprises a seat that can be positioned on the platform of the transporter for co-operating functionally with the corresponding sensors for detection of the presence of the rider, a stabilization unit for stabilizing the transporter, which can be actuated by the rider sitting down, and activation and deactivation means for activating the sensors following upon actuation of the stabilization unit and for deactivating them even automatically in the case of the rider falling off the transporter.

### Prior References:

It will be clearly understood that, although a number of prior art publications may be referred to herein; this reference does not constitute an admission that any of these documents form part of the common general knowledge in the art, in New Zealand or in any other country.

### Definitions:

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

### Object of the Invention

It is an object of the invention to provide a powered mobility device with tilt mechanism having multiple pivots, typically a powered wheelchair, that ameliorates some of the disadvantages and limitations of the known art or at least provide the public with a useful choice.

### Summary of Invention

In a first aspect the invention resides in a powered mobility device with a tilt mechanism having multiple pivots, typically a powered wheelchair, which is able to be driven and steered with or without the use of hands, wherein the powered mobility device includes:
i. at least two drive wheels where each drive wheel is mounted on a separate drive shaft such that the each drive wheel can be independently driven;
ii. a drive controller drivingly coupled to the shafts;
iii. a seat mounted on a tilt mechanism enabling the seat to tilt in a forward, backward, left and right direction as a result of the user displacing their body weight in either of those directions; and
iv. a weight displacement sensor connected to the tilt mechanism and the drive controller such that upon sensing a weight displacement of a user in a particular direction the weight displacement sensor causes the drive controller to impart drive to one or both of the drive wheels to move the mobility device in the direction of the sensed displaced weight of the user and enable the mobility device to be driven in a forward or backward direction and/or steered in a left or right direction;
the mobility device being further characterized in that the tilt mechanism includes a primary pivot, a secondary pivot and a tertiary pivot, where the primary pivot is mounted on the shafts to allow the tilt mechanism to tilt the seat in a backwards or forwards direction, and the secondary pivot is spaced a distance above the primary pivot so that the secondary pivot is situated between the seat and the shafts such that the secondary pivot allows the seat to tilt backwards or forwards about the secondary pivot to enhance the offset of weight transfer to allow increased control of the backwards or forwards tilt of the seat relative to the shafts, where the tertiary pivot is connected to and situated between the secondary pivot and the seat such that the tertiary pivot enables the tilt mechanism to tilt the seat in a left or right direction to allow the mobility device to turn left or right, the tertiary pivot is connected to the secondary pivot by at least one rod that extends upwardly from the secondary pivot towards the seat.

Preferably, the mobility device includes a tilt locker adapted to lock the tilt mechanism to disable the seat from being tilted.

Preferably, the mobility device includes a hand controller selectively engageable with the tilt mechanism and the weight displacement sensor such that the hand controller is adapted to disengage left and right movement of the tilt mechanism so that the hand controller when moved left or right causes the weight displacement sensor to enable the drive controller to steer the mobility device in a desired direction.

Preferably, the primary pivot includes a base unit pivotally situated on the shafts, wherein the base unit houses at least the drive controller.

Preferably, the secondary pivot is situated above and adjacent the base unit so as to pivotally connect a respective end of the rod to the base unit.

Preferably, the tilt mechanism includes one or more adjustable springs to balance and compensate for people of different weights, characterized in that the adjustable spring(s) is/are attached at one end to an upper point/part of the tilt mechanism and is attached at the other end to a fixed point/part on the powered mobility device.

Preferably, the powered mobility device includes a hydraulic system to control and regulate the movement of the seat, characterized in that the hydraulic system includes an hydraulic ram or rams, an hydraulic line or lines and one or more hydraulic flow valve(s), the hydraulic ram or rams is/are connected between the seat and the base unit.

Preferably, the powered mobility device has a line locker is connected to the hydraulic system, and the line locker when activated locks the hydraulic system to disable the seat from moving sideways.

Preferably, the mobility device has two wheels.

Preferably, the weight displacement sensor upon sensing weight displacement in a forward direction causes the drive controller to impart drive to the wheels to move the mobility device in a forward direction.

Preferably, the weight displacement sensor upon sensing weight displacement in a backward direction causes the drive controller to impart drive to the wheels to move the mobility device in a backward direction.

Preferably, the speed of the mobility device is controlled by the forward or backward movement of the seat by the user such that the greater rate of displaced weight in the forward or backward movement of the seat is sensed by the weight displacement sensor and causes the drive controller to increase the drive output to the wheels and thus increase the speed of the mobility device.

Preferably, the degree of turn of the mobility device is controlled by the degree of left or right movement of the user such that the greater the extent of the left or right movement sensed by the weight displacement sensor causes the drive controller to impart a tighter left or right turn of the mobility device.

Any other aspects herein described

### Brief Description

The invention will now be described, by way of example only, by reference to the accompanying drawings:
**Figure 1** is a front side perspective view of a powered mobility device in accordance with a preferred embodiment of the invention.
**Figure 2** is a back side perspective view of the powered mobility device as shown in figure 1.
**Figure 3** is a back side perspective view of the powered mobility device (with the seat removed) as shown in figure 1.
**Figure 4** is a side cutaway side view of a powered mobility device a preferred embodiment of the invention.
**Figure 5** is a back view of the powered mobility device with multiple pivot drive control mechanism as shown in figure 4.

### Description of the Preferred Embodiment(s):

The following description will describe the invention in relation to preferred embodiments of the invention, typically a powered wheelchair, that is able to be steered with or without the use of hands. The invention is in no way limited to these preferred embodiments as they are purely to exemplify the invention only and that possible variations and modifications would be readily apparent without departing from the scope of the invention.

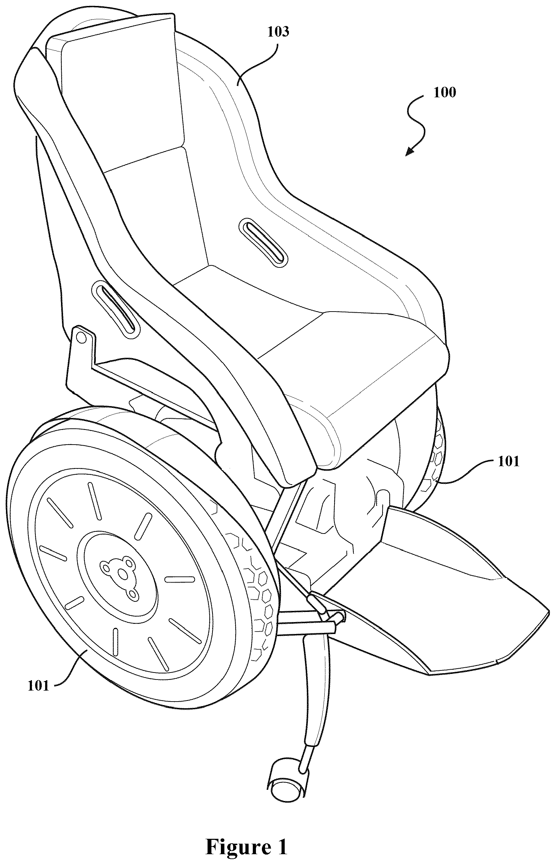

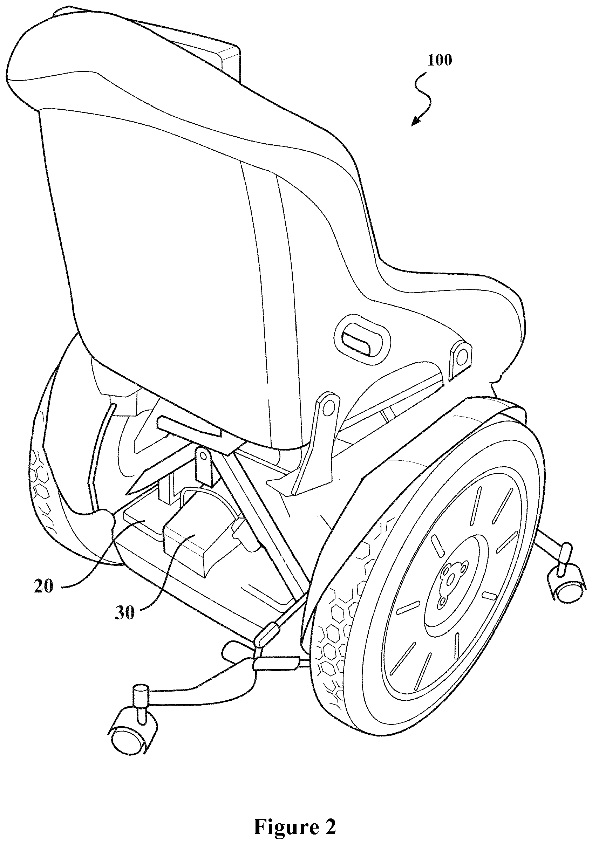

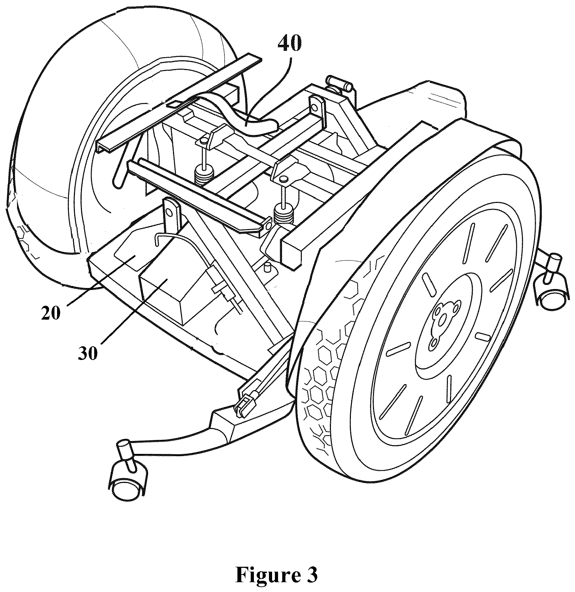

The mobility device shown in the figures 1 to 5 is to a preferred embodiment of a wheelchair.

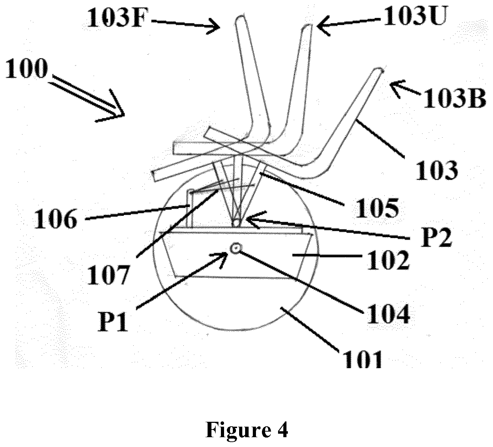

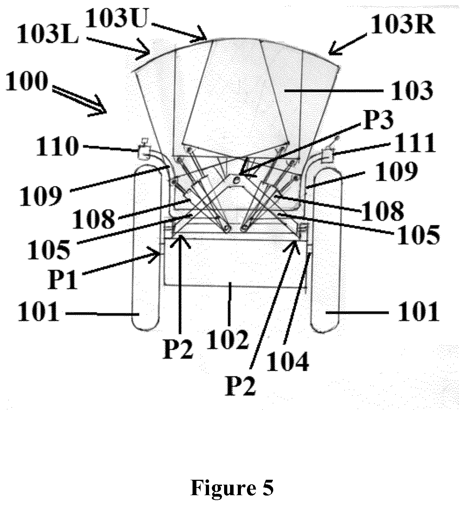

Figures 1 to 3 show differing views of the wheelchair 100 and figures 4 & 5 show the details of the multi pivot arrangement for the wheelchair 100.

The wheelchair 100 is a powered wheelchair 100 and is typically powered by electric battery, however other known modes of powering the wheelchair 100 are envisaged.

The wheelchair 100 is able to be driven on road and off-road. The wheelchair 100 is able to be maneuvered and steered with or without the use of hands. The movement and steering of the wheelchair 100 is able to be undertaken by weight displacement of the user within the seat 103 of the wheelchair 100 without using their hands.

The wheelchair 100 has two wheels 101 each mounted to separate independently driven shafts 104. The driven shafts 104 are drivingly connected to a drive motor via a drive transmission. The drive motor is controlled by a drive controller 20. The drive controller 20 is connected to a weight displacement sensing unit 30. The weight displacement sensing unit 30 is connected to a seat tilt mechanism 40. The seat 103 is detachable to the seat tilt mechanism 40.

The seat 103 is mounted to the tilt mechanism 40 so that the seat 103 can be tilted in a forward direction in order to cause the wheelchair 100 to move forward and can be tilted in a backward direction to move the wheelchair 100 in a reverse direction. The seat 103 is tilted under the action of the user displacing their weight in particular direction they desire the wheelchair to move. The further the weight displacement the faster the wheelchair will move. Tilting of the seat to the left or to the right enables the wheelchair to be steered e.g. shifting of the users weight to the left would cause the wheelchair 10 to be steered to the left.

The wheelchair 103 can include variable tilt lock mechanism to enable the tilt mechanism to be locked so that the seat is unable to be tilted in the left and right directions, however forward and backward movement of the seat is still actionable.

The weight displacement sensing unit 30 upon sensing weight displacement of a user in a forward direction causes the drive controller 20 to impart drive to the wheels such that the wheelchair 100 moves in a forward direction. The weight displacement sensing unit 30 upon sensing weight displacement of a user in a backward direction causes the drive controller 20 to impart drive to the wheels such that the wheelchair 100 moves in a backward direction. The speed of the wheelchair 100 is governed by the rate of forward and backward displaced weight movement of the user in a particular direction. The weight displacement sensing unit 30 uses gyroscopes to sense the weight displacement of a user and includes a biasing system connectable to the tilt mechanism 40. The biasing system has springs located between the tilt mechanism 40 and the weight displacement sensing unit 30. If a user has limited upper body control, these springs provide resistance to return the user to a non tilt position.

The weight displacement sensing unit 30 is able to be activated between an off and on positions such that when in the off position the weight displacement sensing unit 30 is in a non operational state and when in an on position the weight displacement sensing unit 30 is an operational state to sense the weight displacement of a user to drive and steer the wheelchair 100.

The degree of turn of the wheelchair 100 is controlled by the degree of left and right movement of the user such that the greater extent of the left or right movement the tighter the left or right turn able to be achieved.

The seat 103 can be releasably mounted to the tilt mechanism 40 by a cam locking type arrangement so that the seat 103 is able to be removed when required such as to undertake maintenance or replace the seat with another.

The seat 103 has a seat portion, back portion, left side portion and right side portion. The seat and back portions can be separate from the left and right side portions so that the seat and back portion able to move independently relative to the left and side right portions. The left and right side portions can be able to be moved laterally so that the width between the left and side portions can be adjusted in order to accommodate different sized users. Also the left and right side portions are removable to allow users to be loaded on to and unloaded from the wheelchair 100. Alternatively, the left and right side portions are pivotally mounted to the seat such that they are able to be rotated upwardly and out of the way so that a user can be loaded on to and unloaded from the wheelchair 100. The seat 103 is preferably inclined in a forward direction.

The wheelchair 100 includes a dampener situated and connected to the tilt mechanism such that the dampener is adapted to control pendulum effects and oversteering effects upon using the wheelchair 100. The dampener is a hydraulic dampener and includes an adjustable valve 50 so that the dampening effect can be increased or decreased.

The wheelchair 100 can have foot stands that are able to be raised and lowered such that when in the lowered position the foot stands provide stability to the mobility device when stationary. The foot stands at the distal ends can include castor wheels.

The wheelchair 100 includes mudguards extending over and above the wheels 101. The rims of the wheels 101 can includes handgrips such that when desired a user can maneuver the mobility device by hand.

Turning to figures 4 & 5 the mobility device shows details pertaining to the tilt mechanism having multiple pivots in order to control the movement and steering of the wheelchair 100. For illustrative purposes both figures 4 & 5 show the seat 103 in various stages of forward (103F), upright (103U), backward (103B), right sideways (103R) and left sideways (103L) positions.

The wheelchair 100 consists of two spaced apart drive wheels 101, each mounted to a separate shaft 104 that is independent of the other drive wheel. A base 102 is pivotally situated on the shafts 104 which form the primary pivot P1 of the tilt mechanism. The seat 103 is connected to the base 102 about two further pivots, the secondary pivot P2 and tertiary pivot P3, by way of rods 105.

Secondary pivot P2 is situated above and adjacent the base 102 so as to pivotally connect respective ends of the rod 105 to the base 102 (as shown in figure 5). Both the primary and secondary pivots P1 & P2 allow the seat 103 to pivotally move in a forward and backward direction (103F, 103B) relative to the wheels 101 as to allow the wheel chair 100 move in a forward or backward direction. The secondary pivot P2 enhances the offset of weight transfer by a user so as to cause increased control of the back or forward tilt (103F, 103B) of the seat 103 relative to the shaft 104 which is not possible with just a primary pivot.

Tertiary pivot P3 is situated above the secondary pivot P2 and is situated below and adjacent the seat 103 so as to pivotally connect the respective ends of the rod 105 to the seat. Tertiary pivot P3 allows the tilt mechanism to tilt the seat 104 in left and right directions (103R, 103L) so as to allow the wheel chair to turn left or right. In order to enhance and control the movement of the seat 104 in the left and right directions, hydraulic rams 108 are connected between the seat and the base 102. The hydraulic rams are connected to hydraulic lines 109 that are in turn connected to a hydraulic flow valve so that the sideways, forward and backward movement can be controlled and regulated. The hydraulic system is connected to a line locker 111 which is able when activated to lock the hydraulic system such that the seat is unable to move in a sideways movement (103L, 103R). When in this locked movement the sideways movement of the wheel chair is operated by a joystick, preferably situated on and adjacent a side arm of the wheel chair 100.

The adjustable spring(s) 107 is a means of balancing and compensating for people of different weight. The adjustable spring(s) 107 is attached at one end to an upper region of the shaft /rod 105 and is attached at the other end to a fixed point/part 106 on the wheel chair 100.

The base 102 houses the drive control mechanism, the main components of the weight displacement sensing mechanism that is connectable to the tilt mechanism and the drive control mechanism such that upon sensing a weight displacement of a user in a particular direction the weight displacement sensor causes the drive control means to impart drive to the drive wheels via the shafts 104 to move the wheel chair in the direction of the sensed displaced weight of the user so that the wheel chair is able to be driven in a forward and backward direction and steered in a left or right direction. The greater the weight displacement sensed the faster the wheel chair moves, for example leaning forward slightly will cause the wheel chair to move slowly in a forward direction, however leaning far forward will cause the wheel chair to move at a faster speed.

### Advantages

a) A mobility device that is able to be operated by the user only
b) A mobility device that is easily maneuverable
c) A mobility device with a secondary pivot so as to enhance the offset of weight transfer of a user so as to cause increased control of the back or forward tilt of the seat relative to the drive shaft
d) A mobility device that has dual steering functionality
e) A mobility device having variable locking functionality to vary and lock the seat from tilting
f) A mobility device having optional hands steering control
g) A mobility device having sway control
h) A mobility device that is able to be used "off road"

## Claims

1. A powered mobility device with tilt mechanism (40) having multiple pivots (P1, P2, P3), typically a powered wheelchair (100), which is able to be driven and steered with or without the use of hands, wherein the powered mobility device includes:
i. at least two drive wheels (101) where each drive wheel (101) is mounted on a separate drive shaft (104) such that the each drive wheel (101) can be independently driven;
ii. a drive controller (20) drivingly coupled to the shafts (104);
iii. a seat (103) mounted on a tilt mechanism (40) enabling the seat (103) to tilt in a forward, backward, left and right direction as a result of the user displacing their body weight in either of those directions; and
iv. a weight displacement sensor (30) connected to the tilt mechanism (40) and the drive controller (20) such that upon sensing a weight displacement of a user in a particular direction the weight displacement sensor (30) causes the drive controller (20) to impart drive to one or both of the drive wheels (101) to move the mobility device in the direction of the sensed displaced weight of the user and enable the mobility device to be driven in a forward or backward direction and/or steered in a left or right direction;
the mobility device being further **characterized in that** the tilt mechanism (40) includes a primary pivot (P1), a secondary pivot (P2) and a tertiary pivot (P3), where the primary pivot (P1) is mounted on the shafts (104) to allow the tilt mechanism (40) to tilt the seat (103) in a backwards or forwards direction, and the secondary pivot (P2) is spaced a distance above the primary pivot (P1) so that the secondary pivot (P2) is situated between the seat (103) and the shafts (104) such that the secondary pivot (P2) allows the seat (103) to tilt backwards or forwards about the secondary pivot (P2) to enhance the offset of weight transfer to allow increased control of the backwards or forwards tilt of the seat (103) relative to the shafts (104), where the tertiary pivot (P3) is connected to and situated between the secondary pivot (P2) and the seat (103) such that the tertiary pivot (P3) enables the tilt mechanism (40) to tilt the seat (103) in a left or right direction to allow the mobility device to turn left or right, the tertiary pivot (P3) is connected to the secondary pivot (P2) by at least one rod (105) that extends upwardly from the secondary pivot (P2) towards the seat (103).

2. The powered mobility device as claimed in Claim 1, wherein the mobility device further includes a tilt locker (111) adapted to lock the tilt mechanism (40) to disable the seat (103) from being tilted.

3. The powered mobility device as claimed in Claim 1 or Claim 2, wherein the mobility device further includes a hand controller selectively engageable with the tilt mechanism (40) and the weight displacement sensor (30) such that the hand controller is adapted to disengage left and right movement of the tilt mechanism (40) so that the hand controller when moved left or right causes the weight displacement sensor (30) to enable the drive controller (20) to steer the mobility device in a desired direction.

4. The powered mobility device as claimed in claim 1, wherein the primary pivot (P1) includes a base unit (102) pivotally situated on the shafts (104), wherein the base unit (102) houses at least the drive controller (20).

5. The powered mobility device as claimed in claim 4, wherein the secondary pivot (P2) is situated above and adjacent the base unit (102) so as to pivotally connect a respective end of the rod (105) to the base (102).

6. The powered mobility device as claimed in claim 1, wherein the tilt mechanism (40) includes one or more adjustable springs (107) to balance and compensate for people of different weights, **characterized in that** the adjustable spring(s) (107) is/are attached at one end to an upper point/part of the tilt mechanism (40) and is attached at the other end to a fixed point/part on the powered mobility device.

7. The powered mobility device as claimed in claim 1, wherein the tilt mechanism (40) includes a hydraulic system to control and regulate the movement of the seat (103), **characterized in that** the hydraulic system includes an hydraulic ram (108) or rams, an hydraulic line (109) or lines and one or more hydraulic flow valve(s), the hydraulic ram or rams is/are connected between the seat (103) and the base unit (102).

8. The powered mobility device as claimed in claim 7, wherein a line locker (111) is connected to the hydraulic system, and the line locker (111) when activated locks the hydraulic system to disable the seat (103) from moving sideways.

9. The powered mobility device as claimed in claim 1, wherein the mobility device has two wheels (101).

10. The powered mobility device as claimed in claim 1, wherein the weight displacement sensor (30) upon sensing weight displacement in a forward direction causes the drive controller (20) to impart drive to the wheels (101) to move the mobility device in a forward direction.

11. The powered mobility device as claimed in claim 1, wherein the weight displacement sensor (30) upon sensing weight displacement in a backward direction causes the drive controller (20) to impart drive to the wheels (101) to move the mobility device in a backward direction.

12. The powered mobility device as claimed in claim 1, wherein the speed of the mobility device is controlled by the forward or backward movement of the seat (103) by the user such that the greater rate of displaced weight in the forward or backward movement of the seat (103) is sensed by the weight displacement sensor (30) and causes the drive controller (20) to increase the drive output to the wheels (101) and thus increase the speed of the mobility device.

13. The powered mobility device as claimed in claim 1, wherein the degree of turn of the mobility device is controlled by the degree of left or right movement of the user such that the greater the extent of the left or right movement sensed by the weight displacement sensor (30) causes the drive controller (20) to impart a tighter left or right turn of the mobility device.

## Patentansprüche

1. Eine angetriebene Mobilitätsvorrichtung mit Neigungsmechanismus (40), die mehrere Drehgelenke (P1, P2, P3) hat, typischerweise ein angetriebener Rollstuhl (100), der fähig ist, mit oder ohne Benutzung der Hände gefahren und gesteuert zu werden, wobei die angetriebene Mobilitätsvorrichtung umfasst:
i. zumindest zwei Antriebsräder (101), wobei jedes Antriebsrad (101) auf einer separaten Antriebswelle (104) derart angebracht ist, dass jedes Antriebsrad (101) unabhängig angetrieben werden kann;
ii. eine Antriebssteuerung (20), die antriebsmäßig an die Wellen (104) gekoppelt ist;
iii. einen Sitz (103), der auf einem Neigungsmechanismus (40) angebracht ist, der den Sitz (103) befähigt, sich in eine Vorwärts-, Rückwärts-, Links- und Rechtsrichtung zu neigen in Reaktion auf die Körpergewichtsverlagerung des Benutzers in irgendeine dieser Richtungen; und
iv. einen mit dem Neigungsmechanismus (40) und der Antriebssteuerung (20) verbundenen Gewichtsverlagerungssensor (30), derart, dass bei Erfassung einer Gewichtsverlagerung eines Benutzers in eine bestimmte Richtung des Gewichtsverlagerungssensors (30) die Antriebssteuerung (20) veranlasst, Antrieb auf eines oder beide Antriebsräder (101) zu übermitteln, um die Mobilitätsvorrichtung in Richtung der erfassten Gewichtsverlagerung des Benutzers zu bewegen und die Mobilitätsvorrichtung zu befähigen, in Vorwärts- oder Rückwärtsrichtung gefahren und/oder in eine Links- oder Rechtsrichtung gelenkt zu werden;
die Mobilitätsvorrichtung ist ferner **dadurch gekennzeichnet, dass** der Neigungsmechanismus (40) ein primäres (P1), ein sekundäres (P2) und ein tertiäres Drehgelenk umfasst (P3), wobei das primäre Drehgelenk (P1) an den Wellen (104) angebracht ist, um dem Neigungsmechanismus (40) zu ermöglichen, den Sitz (103) in eine Rückwärts- oder Vorwärtsrichtung zu neigen, und das sekundäre Drehgelenk (P2) in einem Abstand über dem primären Drehgelenk (P1) derart angeordnet ist, dass das sekundäre Drehgelenk (P2) sich derart zwischen dem Sitz (103) und den Wellen (104) befindet, dass das sekundäre Drehgelenk (P2) ermöglicht, dass sich der Sitz (103) um das sekundäre Drehgelenk (P2) rückwärts und vorwärts neigt, um den Versatz von der Gewichtsübertragung zu erhöhen, um vergrößerte Steuerung der Rückwärts- und Vorwärtsneigung des Sitzes (103) relativ zu den Wellen zu ermöglichen (104), wobei das tertiäre Drehgelenk (P3) mit dem sekundären Drehgelenk (P2) und dem Sitz (103) verbunden und dazwischen derart angeordnet ist, dass das tertiäre Drehgelenk (P3) dem Neigungsmechanismus (40) ermöglicht, den Sitz (103) in eine linke oder eine rechte Richtung zu neigen, um der Mobilitätsvorrichtung zu ermöglichen, sich nach links oder rechts zu wenden, das tertiäre Drehgelenk (P3) mit dem sekundären Drehgelenk (P2) durch mindestens eine Stange (105) verbunden ist, die sich von dem sekundären Drehgelenk (P2) nach oben in Richtung auf den Sitz (103) erstreckt.

2. Die angetriebene Mobilitätsvorrichtung nach Anspruch 1, wobei die Mobilitätsvorrichtung ferner eine Neigungsverriegelung (111) umfasst, die dazu ausgelegt ist, den Neigungsmechanismus (40) zu verriegeln, um das Neigen des Sitzes (103) abzuschalten.

3. Die angetriebene Mobilitätsvorrichtung nach Anspruch 1 oder 2, wobei die Mobilitätsvorrichtung ferner eine Handsteuerung umfasst, die wahlweise mit dem Neigungsmechanismus (40) und dem Gewichtsverlagerungssensor derart eingekuppelt werden kann (30), dass die Handsteuerung angepasst ist, Links- und Rechtsbewegung des Neigungsmechanismus (40) abzukuppeln, so dass die Handsteuerung bei Links- und Rechtsbewegung den Gewichtsverlagerungssensor (30) veranlasst, der Antriebssteuerung (20) zu ermöglichen, die Mobilitätsvorrichtung in eine gewünschte Richtung zu lenken.

4. Die angetriebene Mobilitätsvorrichtung nach Anspruch 1, wobei das primäre Drehgelenk (P1) eine Basiseinheit umfasst (102), die sich drehgelenksmässig an den Wellen (104) befindet ist, wobei die Basiseinheit (102) zumindest die Antriebssteuerung (20) aufnimmt.

5. Die angetriebene Mobilitätsvorrichtung nach Anspruch 4, wobei sich das sekundäre Drehgelenk (P2) so oberhalb und neben der Basiseinheit (102) befindet, dass es ein jeweiliges Ende der Stange (105) drehgelenksmässig mit der Basis (102) verbindet.

6. Die angetriebene Mobilitätsvorrichtung nach Anspruch 1, wobei der Neigungsmechanismus (40) eine oder mehrere einstellbare Federn (107) umfasst, um für Personen mit unterschiedlichen Gewichten auszugleichen und zu kompensieren, **dadurch gekennzeichnet, dass** die einstellbare(n) Feder(n) (107) an einem Ende an einem oberen Punkt/Teil des Neigungsmechanismus (40) befestigt ist/sind und an dem anderen Ende an einem festen Punkt/Teil an der angetriebenen Mobilitätsvorrichtung befestigt ist/sind.

7. Die angetriebene Mobilitätsvorrichtung nach Anspruch 1, wobei der Neigungsmechanismus (40) ein Hydrauliksystem zur Steuerung und Regelung der Bewegung des Sitzes (103) umfasst, **dadurch gekennzeichnet, dass** das Hydrauliksystem einen Hydraulikkolben (108) oder Kolben, eine Hydraulikleitung (109) oder Leitungen und ein oder mehrere Hydraulikstromventil(e) umfasst, der oder die Hydraulikkolben zwischen dem Sitz (103) und der Basiseinheit (102) verbunden ist/sind.

8. Die angetriebene Mobilitätsvorrichtung nach Anspruch 7, wobei eine Leitungssperre (111) an das Hydrauliksystem angeschlossen ist, und die Leitungssperre (111), wenn sie aktiviert ist, das Hydrauliksystem verschließt, um die vom Seitwärtsbewegung des Sitzes (103) abzuschalten.

9. Die angetriebene Mobilitätsvorrichtung nach Anspruch 1, wobei die Mobilitätsvorrichtung zwei Räder (101) aufweist.

10. Die angetriebene Mobilitätsvorrichtung nach Anspruch 1, wobei der Gewichtsverlagerungssensor (30) bei Erfassung einer Gewichtsverlagerung in einer Vorwärtsrichtung die Antriebssteuerung (20) veranlasst, den Rädern (101) Antrieb zu vermitteln, um die Mobilitätsvorrichtung in eine Vorwärtsrichtung zu bewegen.

11. Die angetriebene Mobilitätsvorrichtung nach Anspruch 1, wobei der Gewichtsverlagerungssensor (30) bei Erfassung einer Gewichtsverlagerung in eine Rückwärtsrichtung die Antriebssteuerung (20) veranlasst, den Rädern (101) Antrieb zu vermitteln, um die Mobilitätsvorrichtung in eine Rückwärtsrichtung zu bewegen.

12. Die angetriebene Mobilitätsvorrichtung nach Anspruch 1, wobei die Geschwindigkeit der Mobilitätsvorrichtung durch die Vorwärts- oder Rückwärtsbewegung des Sitzes (103) durch den Benutzer derart gesteuert wird, dass die größere Rate der Gewichtsverlagerung bei der Vorwärts- oder Rückwärtsbewegung des Sitzes (103) durch den Gewichtsverlagerungssensor (30) erfasst wird und die Antriebssteuerung (20) veranlasst, die Antriebsleistung auf die Räder (101) zu erhöhen und so die Geschwindigkeit der Mobilitätsvorrichtung zu erhöhen.

13. Die angetriebene Mobilitätsvorrichtung nach Anspruch 1, wobei der Grad der Wendung der Mobilitätsvorrichtung durch den Grad der Links- oder Rechtsbewegung des Benutzers derart gesteuert wird, dass das vom Gewichtsverlagerungssensor (30) erfasste größere Ausmaß der Links- oder Rechtsbewegung die Antriebssteuerung (20) veranlasst, der Mobilitätsvorrichtung eine engere Links- oder Rechtswendung zu übermitteln.

## Revendications

1. Un dispositif de mobilité motorisé avec mécanisme d'inclinaison (40) à plusieurs pivots (P1, P2, P3), typiquement un fauteuil roulant motorisé (100), qui est agencé pour être conduit et dirigé avec ou sans les mains, dans lequel le dispositif de mobilité motorisé inclut :
i. au moins deux roues d'entraînement (101), chacune installée sur un arbre d'entraînement séparé (104) de manière que chaque roue d'entraînement (101) peut être entraînée de manière indépendante ;
ii. un contrôleur d'entraînement (20) couplé par entraînement aux arbres (104) ;
iii. un siège (103) installé sur un mécanisme d'inclinaison (40) permettant au siège de s'incliner dans une direction vers l'avant, l'arrière, la gauche et la droite selon le déplacement du poids du corps de l'utilisateur dans une de ces directions ; et
iv. un capteur de déplacement de poids (30) connecté au mécanisme d'inclinaison (40) et contrôleur d'entraînement (20) de manière que lors qu'un déplacement du poids d'un utilisateur dans une direction particulière a été détecté, le capteur de déplacement de poids (30) incite le contrôleur d'entraînement à entrainer une ou des deux roues d'entraînement (101) pour déplacer le dispositif de mobilité dans la direction du déplacement du poids de l'utilisateur détecté et pour permettre le dispositif de mobilité d'être entraîné dans une direction vers l'avant ou l'arrière et/ou d'être tourné dans une direction vers la gauche ou la droite,
le dispositif de mobilité motorisé étant **caractérisé de plus en ce que** le mécanisme d'inclinaison (40) comprend un pivot primaire (P1), un pivot secondaire (P2) et un pivot tertiaire (P3), dans lequel le pivot primaire (P1) est monté aux arbres (104) pour permettre le mécanisme d'inclinaison d'incliner le siège (103) dans une direction vers l'arrière ou l'avant, le pivot secondaire (P2) est situé au-dessus du pivot primaire (P1) de sorte que le pivot secondaire (P2) est situé entre le siège (103) et les arbres (104) de sorte que le pivot secondaire (P2) permet le siège (103) de se déplacer de manière pivotante dans une direction avant et arrière autour du pivot secondaire (P2) pour améliorer le décalage du transfert de poids de sorte à offrir un contrôle accru de l'inclinaison du siège (103) vers l'arrière ou l'avant par rapport aux arbres (104), dans lequel le pivot tertiaire (P3) est connecté à et situé entre le pivot secondaire (P2) et le siège (103) de sorte que le pivot tertiaire (P3) permet au mécanisme d'inclinaison (40) d'incliner le siège (103) vers la gauche et la droite pour permettre le dispositif de mobilité de tourner vers la gauche ou la droite, le pivot tertiaire (P3) étant connecté au pivot secondaire (P2) par au moins une tige (105) s'étendant dans la direction vers le haut depuis le pivot secondaire (P2) vers le siège (103).

2. Le dispositif de mobilité motorisé selon la revendication 1, dans lequel dispositif de mobilité comprend en outre un dispositif de verrouillage d'inclinaison (111) adapté pour verrouiller le mécanisme d'inclinaison (40) afin d'empêcher le siège (103) de s'incliner.

3. Le dispositif de mobilité motorisé selon la revendication 1 ou 2, dans lequel le dispositif de mobilité comprend en outre un dispositif de commande manuelle pouvant être engagé de manière sélective avec le mécanisme d'inclinaison (40) et le capteur de déplacement de poids (30) de sorte que le dispositif de commande manuelle soit adapté pour désengager le mouvement vers la gauche et la droite du mécanisme d'inclinaison (40) de sorte que le dispositif de commande manuelle lorsqu'il est déplacé vers la gauche ou la droite incite le capteur de déplacement de poids (30) à permettre au contrôleur d'entraînement (20) de diriger le dispositif de mobilité dans la direction souhaitée.

4. Le dispositif de mobilité motorisé selon la revendication 1, dans lequel le pivot principal (P1) comprend une unité de base (102) située de manière pivotante sur les arbres (104), dans lequel l'unité de base loge au moins le contrôleur d'entraînement (20).

5. Le dispositif de mobilité motorisé selon la revendication 4, dans lequel le pivot secondaire (P2) est situé au-dessus de l'unité de base (102) et au voisinage de celle-ci de manière à connecter de manière pivotante une extrémité respective de la tige (105) à la base (102).

6. Le dispositif de mobilité motorisé selon la revendication 1, dans lequel le mécanisme d'inclinaison (40) comprend un ou plusieurs ressorts ajustables (107) pour équilibrer et compenser des personnes de poids différents, **caractérisé en ce que** le ou les ressort(s) ajustable(s) (107) est/sont attaché(s) à une extrémité à un(e) point/partie supérieur(e) du mécanisme d'inclinaison (40) et est attaché à l'autre extrémité à un(e) point/partie fixe sur le dispositif de mobilité motorisé.

7. Le dispositif de mobilité motorisé selon la revendication 1, dans lequel le mécanisme d'inclinaison (40) comprend un système hydraulique pour commander et réguler le mouvement du siège (103), **caractérisé en ce que** le système hydraulique inclut un vérin hydraulique (108) ou des vérins hydrauliques, une ligne hydraulique (109) ou des lignes hydrauliques et une ou plusieurs vannes de débit hydrauliques, le ou les vérins hydrauliques est/sont connectés entre le siège (103) et l'unité de base (102).

8. Le dispositif de mobilité motorisé selon la revendication 7, dans lequel un dispositif de verrouillage de ligne (111) est connecté au système hydraulique, et le dispositif de verrouillage de ligne (111) lorsqu'il est activé verrouille le système hydraulique pour empêcher le siège de se déplacer latéralement.

9. Le dispositif de mobilité motorisé selon la revendication 1, dans lequel le dispositif de mobilité a deux roues (101).

10. Le dispositif de mobilité motorisé selon la revendication 1, dans lequel le capteur de déplacement de poids (30) lors de la détection du déplacement du poids dans une direction vers l'avant amène le contrôleur d'entraînement (20) à entraîner les roues (101) pour déplacer le dispositif de mobilité dans une direction vers l'avant.

11. Le dispositif de mobilité motorisé selon la revendication 1, dans lequel le capteur de déplacement de poids (30) lors de la détection d'un déplacement de poids dans une direction vers l'arrière amène le contrôleur d'entraînement (20) à entraîner les roues (101) pour déplacer le dispositif de mobilité dans une direction vers l'arrière.

12. Le dispositif de mobilité motorisé selon revendication 1, dans lequel la vitesse du dispositif de mobilité est contrôlée par le déplacement vers l'avant ou l'arrière du siège par l'utilisateur, de telle sorte que la valeur plus élevée du déplacement du poids dans le mouvement vers l'avant ou l'arrière du siège (103) est détectée par le capteur de déplacement de poids (30) et amène le contrôleur d'entraînement (20) à augmenter l'entraînement des roues (101) et donc à augmenter la vitesse du dispositif de mobilité.

13. Le dispositif de mobilité motorisé selon la revendication 1, dans lequel le degré de rotation du dispositif de mobilité est contrôlé par le degré de mouvement vers la gauche ou la droite de l'utilisateur, de telle sorte qu'un mouvement vers la gauche ou la droite plus important détecté par le capteur de déplacement de poids (30) amène le contrôleur d'entraînement (20) à effectuer un virage plus serré vers la gauche ou vers la droite du dispositif de mobilité.
